# EUROPÄISCHE PATENTSCHRIFT

(11) **EP 2 614 097 B1**
(45) Veröffentlichungstag und Bekanntmachung des Hinweises auf die Patenterteilung: **18.11.2015**
(21) Anmeldenummer: 11757820.3
(22) Anmeldetag: 08.09.2011
(51) Int. Cl.: C08G 18/12, C08G 18/40, C08G 18/42, C08G 18/72, C08G 18/79, C09D 175/04

(54) **EROSIONSSCHUTZ-BESCHICHTUNGSZUSAMMENSETZUNGEN**
EROSION-RESISTANT COATING COMPOSITIONS
COMPOSITIONS DE REVÊTEMENT DE PROTECTION CONTRE L'ÉROSION

(30) Priorität: 10.09.2010 DE 102010044935
(43) Veröffentlichungstag der Anmeldung: 17.07.2013
(73) Patentinhaber: BASF Coatings GmbH, 48165 Münster (DE)
(72) Erfinder: KAUNE, Martin, 26125 Oldenburg (DE); HOLTERS, Bianca, 26180 Rastede (DE); HOHNHOLZ, Dieter, 27243 Groß Ippener (DE)
(74) Vertreter: Leifert & Steffan
(86) Internationale Anmeldenummer: PCT/EP2011/065545
(87) Internationale Veröffentlichungsnummer: WO 2012/032113

(56) Entgegenhaltungen:
- WO-A1-98/44015
- WO-A1-2008/031879
- GB-A- 2 287 469

## Beschreibung

### Gebiet der Erfindung

Die vorliegende Erfindung betrifft Zusammensetzungen, ein Verfahren zu ihrer Herstellung, ihre Verwendung als Beschichtungsmittel, Mehrschichtlackierungen enthaltend diese Zusammensetzungen, Verfahren zur Herstellung der Mehrschichtlackierungen sowie ihre Verwendung. Darüber hinaus betrifft die Erfindung Substrate, die mit der Zusammensetzung bzw. mit der Mehrschichtlackierung beschichtet sind.

### Stand der Technik

Erosionsbeständige Oberflächen werden in zunehmendem Maße für spezielle Funktionen entsprechender Güter benötigt. Beispielhaft zu nennen sind hier Oberflächen, die hinsichtlich der Umgebungsbedingungen hohen Geschwindigkeiten bei gleichzeitiger Belastung durch erodierende Stoffe, z.B. Feststoffe oder Flüssigkeiten, ausgesetzt sind. Eine erodierende Belastung erfahren grundsätzlich Objekte, die einerseits selbst bewegt werden, wie beispielsweise Rotorblätter (von Windenergieanlagen oder Hubschraubern bzw. Schiffsschrauben), Luft- und Landfahrzeuge (wie z.B. Flugzeuge, Schienenfahrzeuge, Automobile) und Schiffe. Andererseits kommen Objekte in Betracht, um die herum oder durch die eine Bewegung stattfinden, wie z.B. Bauwerke (wie z.B. Fassadenelemente, Strommasten bzw. Windenergieanlage- oder Sendetürme) oder Pipelines.

Grundsätzlich können Erosionen hervorgerufen werden durch flüssige oder feste Stoffe, die selbst oder dispers bzw. gelöst in einem anderen gasförmigen oder flüssigen Medium (z.B. Luft oder Wasser) vorliegen und durch dieses Medium bewegt werden (z.B. Flugsand, Regen). Beim Auftreffen auf Gegenstände wird auf diese eine erodierende Kraft ausgeübt. Beispiele dafür sind die Erosion durch Regen oder Flugsand an Rotorblättern oder im Bereich der Vorflügel von Flugzeugen.

Generell besteht die Möglichkeit, den Verschleißschutz wie z.B. die Erosionsbeständigkeit von Beschichtungen durch die nachfolgenden grundsätzlich unterschiedlichen Maßnahmen zu steuern.

Beispielsweise lässt sich die Schichtdicke der Beschichtung erhöhen. Dies ist aus Gewichtsgründen jedoch in vielen Anwendungen, z.B. im Flugzeugbau oder Rotorblattbau von Windenergieanlagen, nicht erstrebenswert.

Weiterhin können Harze mit aromatischen Harzbestandteilen wie z.B. Epoxidharze in den Beschichtungsmitteln eingesetzt werden. Aufgrund der aromatischen Molekülbestandteile bieten die resultierenden Beschichtungen eine hohe Verschleißfestigkeit, jedoch eine deutlich eingeschränkte UV-Beständigkeit.

Darüber hinaus können Beschichtungsmittel eingesetzt werden, die Harze enthalten, mit denen, licht- oder temperaturinduziert, hohe Vernetzungsdichten erzielt werden können. Beispielsweise können UV-Harze (über radikalische oder ionische Polymerisation) oder bestimmte hochreaktive Polyadditionsharze eingesetzt werden. Mit diesen Bindemittelklassen kann ebenfalls die Verschleißbeständigkeit verbessert werden, jedoch gibt es limitierende Faktoren bei der Verwendung auf Großbauteilen wie Rotorblättern oder Flugzeugbauteilen. So besteht bei Formulierungen aus z.B. UV-Harzen eine begrenzte Pigmentauswahl, da diese Absorptionsmaxima in Aushärtungswellenlängen aufweisen können und die Schichtdicken in Abhängigkeit von der Pigmentierungshöhen limitiert sind. Weiterhin ergeben sich anlagentechnische Herausforderungen der Sauerstoffinhibierung der UV-Initiatoren. Bei der Verwendung von temperaturinduzierten Lacken (z.B. Einbrennlacke auf Polyurethanbasis) besteht vor allem die Limitierung hinsichtlich der Einbrenntemperaturen im Bezug zur Anlagendimensionierung bei Großbauteilen.

Die heute im Rotorblatt- oder Flugzeugbau verwendeten Beschichtungen bieten keinen Erosionsschutz für zukünftige Herausforderungen beispielsweise im Rotorblattbau von Windenergieanlagen, insbesondere bezüglich windreicher Standorte (Offshore) oder im Flugzeugbau (Gewichtsverringerung bei gleicher oder besserer Performance). Es gilt daher, die Forderung nach Beschichtungen, welche eine deutliche Verbesserung in der Erosionsbeständigkeit bieten und damit kostenintensive Wartungs- und Reparaturintervalle zu minimieren, zu erfüllen.

Aus der internationalen Patentanmeldung WO 2006/055038A1 der Firma Hontek Corporation sind erosionsbeständige Polyurethanbeschichtungen bekannt, die aus Isocyanat-Präpolymeren in Verbindung mit Polyaspartaten hergestellt werden. Die Beschichtungen erfüllen die Anforderungen bezüglich der Dauer des Erosionsschutzes in nicht ausreichendem Maße. Des Weiteren können diese Materialien bei zu geringer Luftfeuchtigkeit problematisch in ihrer Aushärtung werden.

Neben Beschichtungen als Erosionsschutzbeschichtungen sind auch Folien als Erosionsschutzmittel bekannt. Dabei handelt es sich beispielsweise um Polyurethan-Elastomer-Filme, die mit Acrylaten als Klebstoff ausgestattet sind. Die Folien sind jedoch insbesondere bei größeren bzw. mehrfach gekrümmten Bauteilen wie Flugzeug- oder Rotorblattbauteilen von Windenergieanlagen schwierig zu verarbeiten. Derartige Bauteile lassen sich nicht gleichmäßig mit einer Folie versehen. Ebenso weist der Klebstoff der Folien häufig eine nicht ausreichende Haltbarkeit im Vergleich zu Beschichtungen auf. Dies kann zu einer Abnahme der Erosionsstabilität führen.

### Aufgabe

Der vorliegenden Erfindung lag daher die Aufgabe zugrunde, die zuvor beschriebenen Nachteile des Standes der Technik zu beseitigen. Es sollten Zusammensetzungen zur Verfügung gestellt werden, die als Erosionsschutzbeschichtungen eine deutlich verbesserte Erosionsbeständigkeit aufweisen als Erosionsschutzbeschichtungen des Standes der Technik.

Neben der angestrebten Erosionsfestigkeit der Beschichtungsmaterialien für die oben bereits beschriebenen Anwendungsgebiete sollten die Zusammensetzungen gute Beständigkeiten gegen die allgemeinen Witterungseinflüsse (beispielsweise UV-Strahlung, Feuchtigkeit usw.) bieten. Darüber hinaus sollten die Beschichtungen gegen Betriebsmittel wie Getriebeöle beständig sein. Ebenso sollten die Beschichtungsmittel einfach herstellbar und auch bei großen Bauteilen wie Rotorblättern von Windenergieanlagen oder Flugzeugen einfach verarbeitbar sein.

### Lösung der Aufgabe

Überraschenderweise wurden Zusammensetzungen gefunden, die die Nachteile des Standes der Technik nicht aufweisen. Insbesondere wurden Zusammensetzungen gefunden, die in Beschichtungen eine hohe Erosionsstabilität aufweisen. Demgemäß wurden Zusammensetzungen gefunden, die
a. mindestens eine Polyolkomponente mit einem Gehalt an Hydroxylgruppen von 9 bis 15 Gew.-%, bezogen auf das Gesamtgewicht der Polyolkomponente, wobei die Polyolkomponente mindestens ein Polyol enthält, das ausgewählt ist aus der Gruppe bestehend aus Polyetherpolyolen, Polyesterpolyolen, Polyetherpolyesterpolyolen, und
b. mindestens eine Isocyanatkomponente mit einem Gehalt an Isocyanatgruppen von 10 bis 15 Gew.-%, bezogen auf das Gesamtgewicht der Isocyanatkomponente, wobei die Isocyanatkomponente mindestens ein Di- oder Polyisocyanat-terminiertes Polylacton-Präpolymer enthält,
enthalten.

Die OH-Gruppen der Polyolkomponente und die Isocyanatgruppen der Isocyanatkomponente werden vorzugsweise in einem Äquivalenzverhältnis von 1:0.9 bis 1:1.5 eingesetzt. Bevorzugt beträgt das Äquivalenzverhältnis 1:0.95 bis 1:1.3. Es ist besonders bevorzugt, dass die OH-Gruppen der Polyolkomponente in Relation zu den Isocyanatgruppen der Isocyanatkomponente nicht im Überschuss vorliegen. Ganz besonders bevorzugt ist ein Verhältnis von 1:1 bis 1:1.2, insbesondere beträgt es 1:1.

Weitere bevorzugte Ausführungsformen dieser Erfindung werden durch die Unteransprüche beschrieben.

In der Zusammensetzung können weitere Bindemittel, Pigmente, Lösemittel, Molekularsiebe, Füllstoffe, Farbstoffe, Katalysatoren sowie Zusatz- und Hilfsstoffe enthalten sein. Diese sind verschieden von den Bestandteilen der Polyolkomponente und der Isocyanatkomponente. Sie können sowohl mit der Polyol- als auch mit der Isocyanatkomponente, jedoch bevorzugt mit der Polyolkomponente, vermischt werden.

### Polyolkomponente

Die Polyolkomponente enthält mindestens ein Polyol, welches ausgewählt ist aus der Gruppe bestehend aus Polyetherpolyolen, Polyesterpolyolen und Polyetherpolyesterpolyolen. Polyetherpolyesterpolyole sind Polyole, die sowohl Polyester- als auch Polyetherstrukturen enthalten. Bevorzugt wird das Polyol aus Polyetherpolyolen und Polyesterpolyolen ausgewählt. Besonders bevorzugt wird ein Gemisch aus Polyethern und Polyestern eingesetzt.

Geeignete Polyetherpolyole sind beispielsweise Polyoxyethylene oder Polyoxypropylene.

Die Polyetherpolyole, Polyesterpolyole und Polyetherpolyesterpolyole können dimere Fettsäuren enthalten. Diese Polyole lassen sich beispielsweise über eine Veresterung dimerer Fettsäuren mit mehrwertigen Alkoholen und anschließender Polymerisation herstellen. Als Starter dieser Kondensationsreaktion können Amine, beispielsweise 3,5-Diethyl-2,4-toluoldiamin oder 3,5-Diethyl-2,6-toluoldiamin eingesetzt werden. Bei einem gewünschten OH-Gehalt wird die Reaktion abgebrochen. Weiterhin können die dimere Fettsäuren enthaltenden Polyetherpolyole, Polyesterpolyole und Polyetherpolyesterpolyole durch Epoxidierung dimerer Fettsäuren, anschließender Umsetzung mit mehrwertigen Alkoholen und/oder Carbonsäuren und darauffolgender Polymerisation erhalten werden (Stoye / Freitag: Lackharze, Carl Hansa Verlag München und Wien 1996, ISBN 3-446-17475-3 Seiten 204-210 und Seiten 377-383).

Geeignete dimere Fettsäuren stammen beispielsweise aus natürlichen Ölen wie Sojaöl, Rapsöl, Rizinusöl, Sonnenblumenöl und Palmöl.

Weiterhin kann die Polyolkomponente weitere Polyole wie beispielsweise Polylactone, Polyacrylate und/oder Polyepoxide enthalten.

Die Polyolkomponente enthält vorzugsweise mindestens 50 Gew.-%, bezogen auf das Gesamtgewicht der Polyolkomponente, eines Polyols, welches ausgewählt ist aus der Gruppe bestehend aus Polyetherpolyolen, Polyesterpolyolen und Polyetherpolyesterpolyolen. Bevorzugt sind 80 Gew.-%, besonders bevorzugt 90 Gew.-% und ganz besonders bevorzugt 100 Gew.-%.

Die Polyole der Polyolkomponente können gradkettig oder verzweigt sein. Vorzugsweise sind die Polyole verzweigt. Weiterhin können die Polyole der Polyolkomponente gesättigt oder ungesättigt sein, wobei gesättigte Polyole bevorzugt sind.

Der Anteil der Polyolkomponente, bezogen auf das Gesamtgewicht der Zusammensetzung, beträgt vorzugsweise 5 bis 30 Gew.-% und bevorzugt 15 bis 25 Gew.-%. Die Summe aller Bestandteile der erfindungsgemäßen Zusammensetzung beträgt 100 Gew.-%.

Die Polyolkomponente enthält vorzugsweise OH-Gruppen mit einem Anteil von 10 bis 12 Gew.-% bezüglich des Gesamtgewichts der Polyolkomponente.

Die Polyolkomponente weist vorzugsweise eine Säurezahl von 0 bis 3 mg KOH/g, bezogen auf den Festkörper, auf. Die Säurezahl wird nach ISO 660 bestimmt.

Die Hydroxylgehalt der Polyolkomponente beträgt vorzugsweise 9 bis 13 Gew.-%, bezogen auf das Gesamtgewicht der Polyolkomponente. Der Hydroxylgehalt ist über die Hydroxylzahl zu ermitteln. Die Hydroxylzahl wird dabei nach DIN 53240 bestimmt.

Die Polyolkomponente hat vorzugsweise einen Festkörpergehalt von 95 bis 100 Gew.-%. Der Festkörpergehalt der Zusammensetzung und seiner Bestandteile wird nach DIN ISO 3251 mit einer Einwaage von 1,0 g bei einer Prüfdauer von 60 min bei einer Temperatur von 125 °C durchgeführt.

Die einzelnen Polyole der Polyolkomponente können ein gewichtsmittleres Molekulargewicht von 160 bis 4000 g/mol, vorzugsweise 160 bis 2000 g/mol, aufweisen.

Vorzugsweise weist die Polyolkomponente ein gewichtmittleres Molekulargewicht von 160 bis 800 g/mol auf. Bevorzugt ist ein gewichtsmittleres Molekulargewicht von 180 bis 600 g/mol, besonders bevorzugt 200 bis 500 g/mol.

Die Bestimmung des Molekulargewichts aller beschriebenen Verbindungen erfolgt - soweit nichts anderes angegeben ist - mittels GPC-Analyse mit THF (+0,1 Gew.-% Essigsäure, bezogen auf das THF-Gewicht) als Eluent (1 mL/min) auf einer Styrol-Divinylbenzol-Säulenkombination. Die Kalibrierung wird mit Polystyrol-Standards durchgeführt.

### Isocyanatkomponente

Die Isocyanatkomponente enthält mindestens ein Di- oder Polyisocyanat-terminiertes Polylacton-Präpolymer. Hierunter ist zu verstehen, dass das Präpolymer mit mindestens einem Diisocyanat bzw. mindestens einem Polyisocyanat terminiert ist. Vorzugsweise ist das Präpolymer Diisocyanat-terminiert. Die terminalen NCO-Gruppen können vollständig, teilweise oder gar nicht blockiert sein. Vorzugsweise sind sie nicht blockiert.

Blockierte Isocyanat-Verbindungen können aus Isocyanaten durch Reaktion mit einem Blockierungsmittel erhalten werden. Als Blockierungsmittel für Isocyanate kommen alle üblicherweise eingesetzten Blockierungsmittel wie die entsprechenden Alkohole, Amine, Ketone, Pyrazole und andere in Frage, bevorzugt Blockierungsmittel mit einer Deblockierungstemperatur unterhalb von 60 °C.

Das Präpolymer weist ein gewichtsmittleres Molekulargewicht von 500 bis 4000 g/mol, bevorzugt von 1000 bis 3000 g/mol und besonders bevorzugt von 1800 bis 2200 g/mol auf. Es lässt sich aus Lactonen und mindestens einem Di- oder Polyol als Startermolekül herstellen. Bevorzugt sind Diole, insbesondere Diole mit terminalen OH-Gruppen. Geeignete Di- bzw. Polyole sind Neopentylglykol, Ethylenglykol und Trimethylolpropan. Geeignete Lactone sind Oxiran-2-on, ß-Propiolacton, γ-Butyrolacton, γ-Valerolaction, ε-Caprolacton oder Methyl-ε-caprolacton, vorzugsweise γ-Butyrolacton und ε-Caprolacton, bevorzugt ε-Caprolacton. Demgemäß sind Polybutyrolacton- und Polycaprolacton-Präpolymere bevorzugte Polylacton-Präpolymere. Ganz besonders bevorzugt sind Polycaprolacton-Präpolymere.

Das Präpolymer kann linear oder verzweigt sein. Vorzugsweise ist das Präpolymer linear. Weiterhin kann das Präpolymer gesättigt oder ungesättigt sein, wobei gesättigte Präpolymere bevorzugt sind.

Das Präpolymer ist bei 20 °C und 1013 hPa vorzugsweise flüssig.

Der Anteil an Di- oder Polyisocyanat-terminiertem Polylacton-Präpolymer beträgt vorzugsweise mindestens 50 Gew.-%, bezogen auf das Gesamtgewicht der Isocyanatkomponente. Bevorzugt beträgt der Anteil 50 bis 99 Gew.-%, besonders bevorzugt 70 bis 90 Gew.-%.

Vorzugsweise weist das Polylacton-Präpolymer ein gewichtmittleres Molekulargewicht von 500 bis 4000 g/mol auf. Bevorzugt ist ein gewichtsmittleres Molekulargewicht von 1000 bis 3000 g/mol, besonders bevorzugt 1250 bis 2500 g/mol.

Der Anteil an NCO-Gruppen im Präpolymer liegt bevorzugt bei 6 bis 12 Gew.-%, bezogen auf das Gesamtgewicht des Präpolymers. Bevorzugt beträgt der Anteil 7 bis 10 Gew.-%, besonders bevorzugt 8 bis 9 Gew.-%.

Die Isocyanatkomponente kann weiterhin mindestens eine weitere Isocyanat-Verbindung, welche von dem Präpolymer verschieden ist, enthalten. Die Isocyanat-Gruppen dieser Verbindungen können vollständig, teilweise oder gar nicht blockiert sein. Vorzugsweise sind sie nicht blockiert.

Als weitere Isocyanat-Verbindungen kommen die im Bereich der Lackindustrie üblicherweise eingesetzten aromatischen und aliphatischen Isocyanat-Verbindungen in Betracht. Vorzugsweise werden Di- oder Polyisocyanat-Verbindungen eingesetzt. Bevorzugt sind aliphatische Di- oder Polyisocyanate. Besonders bevorzugt sind aliphatische Diisocyanate.

Der Anteil an NCO-Gruppen der weiteren Isocyanat-Verbindungen liegt bevorzugt bei 15 bis 30 Gew.-%, bezogen auf das Gesamtgewicht der weiteren Isocyanat-Verbindung. Bevorzugt beträgt der Anteil 20 bis 25 Gew.-%.

Mögliche aromatische Isocyanat-Verbindungen können z.B. 2,4-Toluyendiisocyanat und 2,6-Toluyendiisocyanat (TDI), 4,4-Diisocyanatoodiphenylmethan (MDI), p-Phenylendiisocyanat (PPDI) oder deren Oligomere, wobei die Oligomere bevorzugt sind.

Geeignete aliphatische Diisocyanate sind beispielsweise 1,6-Hexamethylendiisocyanat, (HDI), 1,3-Cyclohexyldiisocyanat, 1,4-Cyclohexyldiisocyanat (CHDI), Diphenylmethandiisocyanate (H(12)MDI), 2,2,4- und/ oder 2,4,4-Trimethyl1,6-hexamethylendiisocyanat, Dodecamethylendiisocyanat, 1,4-Diisocyanatcyclohexan, 1-Isocyanato-3,5,5-trimethyl-3-isocyanato-methylcyclohexan (IPDI) oder deren Oligomere, wobei die Oligomere bevorzugt sind.

Oligomere umfassen Isocyanurate und/oder Uretdione.

Weiterhin können Isocyanat-Polymere als weitere Isocyanat-Verbindungen eingesetzt werden. Diese können erhalten werden aus der Reaktion der zuvor genannten aromatischen und aliphatischen Isocyanat-Verbindungen oder deren Oligomeren mit OH-, NH- oder SH-Gruppen enthaltenden Harzen. Die Isocyanat-Polymere enthalten vorzugsweise weniger als 0,1 Gew.-% an freien OH-, NH- oder SH-Gruppen, bezogen auf das Gesamtgewicht der Isocyanat-Polymere. Besonders bevorzugt enthält das Isocyanat-Polymer keine freien OH-, NH- oder SH-Gruppen.

Die weitere Isocyanat-Verbindung ist vorzugsweise mit einem Anteil von 1 bis 50 Gew.-%, bevorzugt 10 bis 30 Gew.-%, bezogen auf das Gesamtgewicht der Isocyanatkomponente, enthalten.

Die Isocyanatkomponente enthält vorzugsweise Isocyanat-Gruppen mit einem Gehalt von 10 bis 13 Gew.-% bezüglich des Gesamtgewichts der Isocyanatkomponente.

Der Anteil der Isocyanatkomponente in der erfindungsgemäßen Zusammensetzung beträgt vorzugsweise bis zu 70 Gew.-%, bezogen auf das Gesamtgewicht der Zusammensetzung. Bevorzugt sind 40 bis 63 Gew.-% und besonders bevorzugt 47 bis 60 Gew.-%. Ganz besonders bevorzugt ist ein Anteil von 47 bis 53 Gew.-%.

Eine ganz bevorzugte Zusammensetzung der vorliegenden Erfindung enthält als Polyolkomponente ein Gemisch aus Polyether und Polyestern, wobei der Anteil der Polyolkomponente 15 bis 25 Gew.-%, bezogen auf das Gesamtgewicht der Zusammensetzung, beträgt. Die Polyolkomponente enthält OH-Gruppen mit einem Anteil von 10 bis 12 Gew.-% bezüglich des Gesamtgewichts der Polyolkomponente. Als Isocyanatkomponente dieser ganz bevorzugten Zusammensetzung wird ein Gemisch aus einem Diisocyanat-terminiertem Polycaprolacton-Präpolymer und einer weiteren Isocyanatverbindung eingesetzt, wobei der Anteil des Diisocyanatterminierten Polycaprolacton-Präpolymers 70 bis 90 Gew.-%, bezogen auf das Gesamtgewicht der Isocyanatkomponente, und der Anteil der Isocyanatkomponente 47 bis 53 Gew.-%, bezogen auf das Gesamtgewicht der Zusammensetzung, beträgt. Die Isocyanatkomponente enthält Isocyanat-Gruppen mit einem Anteil von 10 bis 13 Gew.-% bezüglich des Gesamtgewichts der Isocyanatkomponente.

### Weitere Bindemittel

Die erfindungsgemäße Zusammensetzung kann weitere Bindemittel mit funktionellen Gruppen sowie mindestens ein Vernetzungsmittel mit einer zu den funktionellen Gruppen des Bindemittels komplementären Funktionalität enthalten. Beispiele für solche komplementären Funktionalitäten sind insbesondere (Carboxyl/Epoxy), (Amin oder Thiol/ alkoxylierte Aminogruppen oder umesterungsfähige Gruppen), ((Meth)Acryloyl/CH-acide oder Amin oder Thiol), (Carbamat/alkoxylierte Aminogruppen) und ((Meth)Acryloyl/(Meth)Acryloyl).

Weiterhin können die Bindemittel ethylenisch ungesättige Doppelbindungen aufweisen. Diese können beispielsweise in Acrylat-, Styrol- oder Polyurethan-Polymeren enthalten sein.

Darüber hinaus können Alkoxysilangruppen enthaltende Polymere als weitere Bindemittel enthalten sein. Vorzugsweise sind epoxy- oder aminomodifizierte Alkoxysilangruppen enthaltende Polymere. Besonders bevorzugt enthalten die Polymere Di- und/oder Trialkoxysilangruppen.

Bevorzugte weitere Bindemittel enthalten ethylenisch ungesättige Doppelbindungen.

Es ist bevorzugt, dass Vernetzungsmittel wie Aminoplastharze oder Tris(alkoxycarbonylamino)-1,3,5-triazine (TACT) in der Zusammensetzung nicht enthalten sind.

Die weiteren Bindemittel können mit einem Anteil von 5 bis 30 Gew.-%, bezogen auf das Gesamtgewicht der Zusammensetzung, in der erfindungsgemäßen Zusammensetzung enthalten sein.

### Pigmente

Die erfindungsgemäße Zusammensetzung kann Pigmente enthalten. Vorzugsweise enthält die Zusammensetzung 2 bis 20 Gew.-%, bezogen auf das Gesamtgewicht der Zusammensetzung, mindestens eines Pigments. Bevorzugt sind Zusammensetzungen, die 5 bis 10 Gew.-% Pigmente enthalten.

Pigmente sind pulver- oder plättchenförmige Farbmittel, die im Gegensatz zu Farbstoffen im umgebenden Medium unlöslich sind (vgl. Römpp Lacke und Druckfarben, Georg Thieme Verlag Stuttgart / New York 1998, Seite 451, Stichwort "Pigmente").

Vorzugsweise wird das Pigment aus der Gruppe bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten ausgewählt. Bevorzugt werden die farb- und/oder effektgebenden Pigmente verwendet.

### Lösemittel

Die Zusammensetzung kann als Lösemittel Wasser oder organische Lösemittel enthalten. Vorzugsweise sind maximal 5 Gew.-%, bevorzugt maximal 2 Gew.-% Lösemittel, bezogen auf das Gesamtgewicht der Zusammensetzung, enthalten. Besonders bevorzugt sind Zusammensetzungen, die frei von Lösemitteln sind.

### Molekularsieb

Die erfindungsgemäße Zusammensetzung kann ein Molekularsieb oder mehrere Molekularsiebe enthalten. Molekularsieb ist die Bezeichnung für natürliche oder synthetische Zeolithe. Sie weisen eine relativ hohe innere Oberfläche (ca. 600 bis 700 m²/g) und einheitliche Porendurchmesser auf. Dadurch ergibt sich ein relativ starkes Adsorptionsvermögen. Vorzugsweise enthält die Zusammensetzung 1 bis 10 Gew.-%, bezogen auf das Gesamtgewicht der Zusammensetzung, mindestens eines Molekularsiebs.

Geeignete Molekularsiebe weisen eine Porengrößen von 2 bis 10, vorzugsweise 3 bis 4 Angström auf. Beispielsweise können hochporöse Aluminiumsilicate mit einer Porengröße von 3 Angström eingesetzt werden.

### Füllstoffe

Die erfindungsgemäße Zusammensetzung kann organische und anorganische Füllstoffe enthalten. Geeignete Füllstoffe sind z.B. Talkum, Calciumcarbonate, Bariumsulfate und Siliziumdioxide. Bevorzugte Füllstoffe sind Calciumcarbonate, Bariumsulfate und Siliziumdioxide.

Vorzugsweise enthält die Zusammensetzung 20 bis 50 Gew.-%, bezogen auf das Gesamtgewicht der Zusammensetzung, mindestens eines Füllstoffs.

### Farbstoffe

Die erfindungsgemäße Zusammensetzung kann Farbstoffe enthalten. Farbstoffe sind organische, im umgebenden Medium lösliche schwarze oder bunte Substanzen (vgl. Römpp Lacke und Druckfarben, Seite 221, Stichwort "Farbmittel"). Vorzugsweise enthält die Zusammensetzung 0,1 bis 1,0 Gew.-%, bezogen auf das Gesamtgewicht der Zusammensetzung, mindestens eines Farbstoffs.

### Katalysatoren

Die erfindungsgemäße Zusammensetzung kann Katalysatoren für die Reaktion von Hydroxyl- mit Isocyanat-Gruppen enthalten. Vorzugsweise enthält die Zusammensetzung 0,05 bis 2 Gew.-%, bezogen auf das Gesamtgewicht der Zusammensetzung, mindestens eines Katalysators. Bevorzugt enthält die erfindungsgemäße Zusammensetzung 0,1 bis 1 Gew.-%, jeweils bezogen auf das Gesamtgewicht der Zusammensetzung, mindestens eines Katalysators.

Geeignete Katalysatoren sind Metallkatalysatoren wie beispielsweise Zinn-, Molybdän-, Zirkon oder Zinkkatalysatoren sowie aminische Katalysatoren wie zum Beispiel 2-(2-Dimethylamino-ethoxy)ethanol.

### Hilfs- und Zusatzstoffe

Die erfindungsgemäße Zusammensetzung kann Hilfs- und Zusatzstoffe enthalten, welche verschieden sind von den zuvor genannten Stoffen. Vorzugsweise enthält die Zusammensetzung 2 bis 5 Gew.-%, bezogen auf das Gesamtgewicht der Zusammensetzung, mindestens eines Hilfs- oder Zusatzstoffs.

Geeignete Hilfs- oder Zusatzstoffe sind die üblicherweise in der Lackindustrie eingesetzten, bekannten Hilfs- und Zusatzstoffe.

Beispiele für geeignete Hilfs- und Zusatzstoffe sind übliche Hilfs- und Zusatzstoffe wie z.B. Antioxidantien, Entlüftungsmittel, Netzmittel, Dispergiermittel, Emulgatoren, Rheologiehilfsmittel wie Verlaufsmittel, Verdickungsmittel, Antiablaufmittel und Thixotropiermittel, Wachse und wachsartige Verbindungen, Slipadditive, Reaktivverdünner, Rieselhilfen, Sikkative, Biozide, Additive zur Verbesserung der Untergrundbenetzung, Additive zur Verbesserung der Oberflächenglätte, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, wie sie in dem Buch "Lackadditive" von Johan Bielemann, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, UV-Absorber und Radikalfänger. Besonders bevorzugte Hilfs- und Zusatzstoffe sind UV-Absorber, Netzmittel sowie Rheologiehilfsmittel.

Durch Hinzugabe der Hilfs- und Zusatzstoffe kann die Beschichtung der erfindungsgemäßen Erosionsschutzbeschichtung mit Oberflächeneffekten, wie z.B. Verschmutzungs- und Bewuchsverminderung, Aerodynamikverbesserung (strömungsbegünstigende Oberflächen wie z.B. Riblets) oder Easy-to-clean Eigenschaften ausgerüstet werden.

### Weitere Gegenstände der Erfindung

Die erfindungsgemäße Zusammensetzung wird vorzugsweise nach dem erfindungsgemäßen Verfahren zur Herstellung der erfindungsgemäßen Zusammensetzung hergestellt.

Demnach ist ein Verfahren zur Herstellung der erfindungsgemäßen Zusammensetzung ein weiterer Gegenstand der vorliegenden Erfindung. Dabei kann die Zusammensetzung durch Vermischen und ggf. Homogenisieren mindestens einer Polyolkomponente mit mindestens einer Isocyanatkomponente hergestellt werden. Vorzugsweise werden sie in den bereits genannten Mischungsverhältnissen miteinander vermischt und ggf. homogenisiert.

Ein weiterer Gegenstand der vorliegenden Erfindung ist die Verwendung der Zusammensetzung als Beschichtungsmittel. Vorzugsweise wird die Zusammensetzung als Erosionsschutzbeschichtungsmittel verwendet. Das Beschichtungsmittel wird bevorzugt zur Herstellung einer Erosionsschutzschicht in Mehrschichtlackierungen eingesetzt.

Die erfindungsgemäße Zusammensetzung kann als Original Equipment Manufacturer (OEM)-Lack oder als Reparaturlack eingesetzt werden.

Ein weiterer Gegenstand der Erfindung ist eine Mehrschichtlackierung umfassend mindestens eine Lackierung der erfindungsgemäßen Zusammensetzung. Vorzugsweise umfasst die Mehrschichtlackierung zusätzlich mindestens eine Grundierung.

Die Lackierung der erfindungsgemäßen Zusammensetzung kann in der erfindungsgemäßen Mehrschichtlackierung selbst als Decklackierung (äußerste Lackierung) fungieren. Weiterhin kann die Lackierung der erfindungsgemäßen Zusammensetzung mit mindestens einem weiteren Lack (im Folgenden als Decklack bezeichnet) überlackiert sein, wobei die Lackierung des weiteren Lacks als Decklackierung fungiert.

Als Decklacke sind alle üblicherweise eingesetzten lösemittelhaltigen oder wässrigen pigmentierten Beschichtungsmittel geeignet. Die eingesetzten Decklacke können thermisch und/oder mittels Strahlung, insbesondere mittels IR-Strahlung, härtbar sein.

Die Decklacke enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere (Carboxyl/Epoxy), (Amin oder Thiol oder Hydroxyl/blockiertes oder freies Isocyanat oder alkoxylierte Aminogruppen oder umesterungsfähige Gruppen), ((Meth)Acryloy/CH-acide oder Amin oder Hydroxyl oder Thiol), (Carbamat/alkoxylierte Aminogruppen) und ((Meth)Acryloyl/(Meth)Acryloyl).

Eingesetzt werden insbesondere Decklacke auf Basis von Polyurethanharzen und/oder Polyacrylatharzen und/oder Polyesterharzen, bevorzugt mit Hydroxyl-, Amino-, Carbamat-, Carboxyl-, (Meth)acryloyl- und/oder Thiolgruppen in Kombination mit den entsprechenden Vernetzern, insbesondere in Kombination mit Isocyanaten.

Neben dem Bindemittel und dem Vernetzer enthalten die Decklacke übliche Hilfs- und Zusatzstoffe, wie beispielsweise Katalysatoren für die Vernetzung, Entschäumer, Haftvermittler, Additive zur Verbesserung der Untergrundbenetzung, Rheologiemittel, Wachse, Verlaufsmittel, Lichtschutzmittel, vorzugsweise die oben beschriebenen UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden. Geeignete pigmentierte Beschichtungsmittel sind beispielsweise in der deutschen Patentanmeldung DE-A-2006053776 beschrieben.

Ein weiterer Gegenstand der vorliegenden Erfindung ist ein Verfahren zur Herstellung der erfindungsgemäßen Mehrschichtlackierung. Dabei wird mindestens eine erfindungsgemäße Zusammensetzung auf ein Substrat aufgetragen. Auf die Lackierung der erfindungsgemäßen Zusammensetzung kann mindestens eine weitere Lackierung eines Decklacks aufgetragen werden. Der Decklack kann Nassin-Nass appliziert werden. Die Lackierungen der erfindungsgemäßen Zusammensetzung und des Decklacks können gemeinsam gehärtet werden.

Der Decklack sowie die erfindungsgemäße Zusammensetzung können mit den üblichen Verfahren wie Spritzen (z.B. Airless, Airmix, Druckluft, Heißspritzverfahren oder Induktionsvermischung), Walzen, Rollen, Streichen oder über eine Kartusche appliziert werden. Vorzugsweise werden der Decklack sowie die erfindungsgemäße Zusammensetzung gespritzt, gerollt oder über eine Kartusche appliziert.

Die Lackierung der erfindungsgemäßen Zusammensetzung wird vorzugsweise in einer Trockenfilmschichtdicke von 100 bis 1000 µm aufgetragen. Bevorzugt ist eine Trockenfilmschichtdicke von 200 bis 800 µm, besonders bevorzugt 300 bis 600 µm.

Die Lackierungen des Decklacks können jeweils eine Trockenfilmschichtdicke von 80 bis 300 µm, vorzugsweise von 80 bis 150 µm aufweisen.

Die Lackierung der erfindungsgemäßen Zusammensetzung sowie ggf. die Lackierung des Decklacks können thermisch und/oder aktinisch gehärtet werden. Vorzugsweise erfolgt die Härtung thermisch, bevorzugt bei einer Temperatur von bis zu 60 °C. Besonders bevorzugt ist ein Temperaturbereich von 15 bis 60 °C, ganz besonders von 18 bis 50 °C.

Die thermische Aushärtung erfolgt vorzugsweise während einer Zeit von 30 bis 90 min bei 40 °C bis 60 °C oder 4 bis 6 h bei 15°C. bis 25 °C. Eine vollständige Durchhärtung ist üblicherweise bei 20 °C nach ca. sieben Tagen gegeben. Der Fachmann spricht dann von der "Ausbildung der Endeigenschaften".

Für die Trocknung bzw. Konditionierung der nassen Schichten werden bevorzugt thermische und/oder Konvektionsverfahren verwendet, wobei übliche und bekannte Vorrichtungen wie Durchlauföfen, NIR- und IR- Heizstrahler, Gebläse und Blastunnel eingesetzt werden. Diese Vorrichtungen können auch miteinander kombiniert werden.

Die erfindungsgemäßen Mehrschichtlackierungen können auf beliebige Substrate aufgebracht werden. Dabei fungiert die Schicht der erfindungsgemäßen Zusammensetzung als Erosionsschutzschicht. Die Substrate können aus den unterschiedlichsten Materialien und Kombinationen von Materialien aufgebaut sein. Vorzugsweise bestehen sie aus Metallen wie Stahl oder Aluminium, Kunststoffen, die glasfaser- (GFK), aramidfaser- (AFK), kohlefaserverstärkt (CFK) oder beispielsweise mit Hanf oder Sisal naturfaserverstärkt sein können und/oder Glas, besonders bevorzugt aus Metall und/oder Kunststoff.

Geeignete Substrate sind beispielsweise solche, die der Regen- oder Sanderosion besonders stark ausgesetzt sind. Als Substrate können Rotorblätter, Luft- oder Landfahrzeuge, Schiffe, Bauwerke oder Pipelines in Frage kommen. Bevorzugte Substrate sind Rotorblätter von Windenergieanlagen, Hubschraubern oder Schiffsschrauben sowie Luftfahrzeuge wie beispielsweise Flugzeuge. Insbesondere sind Rotorblätter von Windenergieanlagen und Flugzeuge geeignete Substrate.

Die erfindungsgemäße Zusammensetzung wird zur Kosten- bzw. Gewichtsminimierung vorzugsweise bei Flugzeugen im Bereich der Vorflügel oder bei Rotorblättern an der Naht zusammengesetzter Rotorblattbauteile aufgetragen.

Die Substrate sind üblicherweise mit einer Grundierung versehen, die mit den üblichen Verfahren wie Spritzen (z.B. Airless, Airmix, Druckluft, Heißspritzverfahren oder Induktionsvermischung), Walzen, Rollen oder Streichen appliziert werden. Anschließend können Spachtelschichten und Porenfüller aufgebracht werden, bevor mindestens eine erfindungsgemäße Zusammensetzung und gegebenenfalls anschließend mindestens ein Decklack aufgetragen werden.

Ein weiterer Gegenstand der Erfindung ist die Verwendung der erfindungsgemäßen Mehrschichtlackierungen zur Beschichtung von Substraten. Die Beschichtung dient dabei insbesondere als Erosionsschutzbeschichtung. Vorzugsweise handelt es sich um die oben angegebenen Substrate.

Ein weiterer Gegenstand der Erfindung sind die oben genannten Substrate, die mit der erfindungsgemäßen Zusammensetzung bzw. der erfindungsgemäßen Mehrschichtlackierung beschichtet sind. Vorzugsweise bildet die erfindungsgemäße Zusammensetzung die Erosionsschutzschicht einer Mehrschichtlackierung.

### Prüfmethoden

Mit den Prüfmethoden lassen sich Regen- und Sanderosionsbeständigkeiten der Beschichtungen testen.

Zur labortechnischen Bestimmung der Erosionsbeständigkeiten können unterschiedliche Gerätschaften verwendet werden, bei denen entweder das zu erodierende Gut durch das Erosionsmedium bewegt wird oder das erodierende Gut feststeht und vom Erosionsmedium umströmt wird. Ein feststehender Prüfkörper kann beispielsweise durch eine Hochdruck-Wasserstrahl-Technik, welche z. B. beim Wasserstrahlschneiden verwendet wird, getestet werden. Die Erosionswirkung wird gesteuert durch Wasserdruck, Abstand zum Werkstück sowie Düsengröße und -art. Durch die Mitverwendung von Sand, Korund oder Siliziumcarbid kann die Wirkung weiter verstärkt werden. Weiterhin ist Sandstrahlen oder Dampfstrahlen denkbar, wobei ebenfalls durch den anliegenden Druck, Düsengröße und Abstand zum Werkstück die Erosionswirkung variiert und den Realbedingungen angepasst werden kann.

Beim Regenerosionstest für bewegte Prüfkörper wird das erodierende Gut an einem Rotor oder Scheibe befestigt und durch die erzeugte Radialgeschwindigkeit durch einen Vorhang aus Wassertropfen oder Gemischen mit Salz oder Sand bewegt. Das derzeit gängigste Prüfszenario, welches z. B. im Bereich der Windenergie verwendet wird, arbeitet bei Geschwindigkeiten von 140 m/s und einer Regenmenge von 30 l/h. Im Bereich der Flugzeugindustrie werden Geschwindigkeiten von bis zu 220 m/s bei vergleichbarer Regenmenge geprüft. Die Prüfungen zur Regenerosionsbeständigkeit können nach der Norm ASTM G 73 erfolgen. Die unter diese Norm fallenden Aufbauten sind individuell und können über Standards miteinander verglichen werden.

Zur Beurteilung der Sanderosionsbeständigkeit lassen sich bewegte Prüfkörper im vordefinierten Winkel in einen Luftstrom einbringen. Beispielsweise werden die Proben in einem Winkel von 45° in einen Luftstrom eingebracht (v = 30m/s), dem eine definierte Menge Sand der Körnung 0,2 - 0,6 mm (entsprechend der mittleren Körnung von Flugsand 0,05 - 0,8 mm) zudosiert wird (Massenstrom von 400 g/min). Die Erosionsbeständigkeit entspricht wiederum der Zeit bis zum ersten Durchscheinen des Substrates.

Allen zuvor genannten Prüfmöglichkeiten ist gemein, dass reale Geschwindigkeiten, wie z.B. Umfangsgeschwindigkeiten von Rotorblättern oder Reisefluggeschwindigkeiten von Flugzeugen simuliert werden und die Schadensbilder den real auftretenden Schadensbildern ähnlich sind.

Die Shorehärte ist die Bestimmung der Eindruckhärte von Elastomeren (A) und Duromeren (D). Sie kann nach DIN EN ISO 868 geprüft werden. Vorzugsweise weisen die Lackierungen der erfindungsgemäßen Zusammensetzung eine Shorehärte von A 50 bis A 90 auf. Dadurch werden flexible bis zähelastische Beschichtungen erhalten. Bevorzugt ist eine Shorehärte von A 60 bis A 80.

Im Folgenden wird die Erfindung unter Bezugnahme auf Beispiele weiter erläutert.

### Beispiele

| | **Beispiel 1** | **Beispiel 2** | **Vergleich 1** | **Vergleich 2 Richtrezeptur Fa. Bayer RUT 3652/1** |
|---|---|---|---|---|
| | Menge | Menge | Menge | Menge |
| **Stammkomponente** | | | | |
| Polymer basierend auf Polyether; Polyester | 30,500 | 30,500 | 30,500 | 54,9 |
| Pigment Molekularsieb und Füllstoffmischung | 51,800 | 51,820 | 51,820 | 43,9 |
| Additivmischung | 7,500 | 7,480 | 7,480 | 2,0 |
| Katalysatormischung | 0,200 | 0,200 | 0,200 | 0,02 |
| | | | | |
| **Isocyanatkomponente** | | | | |
| Diisocyanat-terminiertes Polycaprolacton-Präpolymer | 80,000 | 80,000 | | |
| Hexamethylendiisocyanat-Oligomere | 20,000 | | | |
| Isophorondiisocyanat-Oligomere | | 20,000 | | |
| HDI-Isocyanat-Trimerisat | | | 100,000 | 100,000 |
| | | | | |
| **Mischungsverhältnis** | 100:100 | 100:100 | 100:60 | 100:75 |
| | | | | |

| | | | | |
|---|---|---|---|---|
| Alle Angaben in kg. | | | | |

### Testbedingungen

### Regenerosionstestsstand

Die Prüfungen erfolgen nach der Norm ASTM G 73. Sie werden auf einem hauseigenen Regenerosions-Prüfstand durchgeführt. Die Prüfkörper werden in bestimmten Zeitabständen (15 Minuten) bei definierter Geschwindigkeit (140 m/s) durch einen Tropfenvorhang geschleudert. Die Regenmenge wird dabei durch die angelegte Durchflussrate ebenfalls konstant gehalten (30 l/h). Die Tropfengrößen des angelegten "Regens" beträgt dabei durchschnittlich 5-6 mm. Die Prüfungen erfolgen bei einer Temperatur von 20 bis 25 °C. Die Auswertung erfolgt visuell und wird mittels eines Fotos dokumentiert. Die Erosionsbeständigkeit entspricht der Zeit bis zum ersten Durchscheinen des Substrates.

Die Lackierungen wurden mit einer Trockenfilmschichtdicke von etwa 300 µm auf einen mit einem Porenfüller grundierten Epoxidharz-Prüfkörper aufgetragen und für 7 Tage bei einer Temperatur von 20 bis 25 °C gelagert.

### Shorehärte

Die Shorehärte wird nach DIN EN ISO 868 bestimmt.

| | **Erf.-gemäß Beispiel 1** | **Erf.-gemäß Beispiel 2** | **Vergleich 1** | **Vergleich 2** |
|---|---|---|---|---|
| Applikationsart | Spritzen | Spritzen | Spritzen | Spritzen |
| Dauer Regenerosionstest | 180 min | 160 min | 45 min | 60 min |
| Shore-Härte | A 70 | A 65 | D 65 | D 24 |

Im Vergleich zu den im Stand der Technik eingesetzten Zusammensetzungen weist die erfindungsgemäße Zusammensetzung unter den oben genannten Bedingungen eine bis zu drei Mal höhere Erosionsbeständigkeit auf.

## Patentansprüche

1. Zusammensetzung enthaltend
a. mindestens eine Polyolkomponente mit einem Gehalt an Hydroxylgruppen von 9 bis 15 Gew.-%, bezogen auf das Gesamtgewicht der Polyolkomponente, wobei die Polyolkomponente mindestens ein Polyol enthält, das ausgewählt ist aus der Gruppe bestehend aus Polyetherpolyolen, Polyesterpolyolen und Polyetherpolyesterpolyolen, und
b. mindestens eine Isocyanatkomponente mit einem Gehalt an Isocyanatgruppen von 10 bis 15 Gew.-%, bezogen auf das Gesamtgewicht der Isocyanatkomponente, wobei die Isocyanatkomponente mindestens ein Di- oder Polyisocyanat-terminiertes Polylacton-Präpolymer enthält.

2. Zusammensetzung nach Anspruch 1, **dadurch gekennzeichnet, dass** die Polyolkomponente mindestens 50 Gew.-%, bezogen auf das Gesamtgewicht der Polyolkomponente, Polyole enthält, die ausgewählt sind aus der Gruppe bestehend aus Polyetherpolyolen, Polyesterpolyolen und Polyetherpolyesterpolyolen und/oder dass die Isocyanatkomponente mindestens 50 Gew.-%, bezogen auf das Gesamtgewicht der Isocyanatkomponente, eines Di- oder Polyisocyanat-terminierten Polylacton-Präpolymers enthält.

3. Zusammensetzung nach einem der vorherigen Ansprüche, **dadurch gekennzeichnet, dass** die OH-Gruppen der Polyolkomponente und die Isocyanatgruppen der Isocyanatkomponente in einem Äquivalenzverhältnis von 1:0.9 bis 1:1.5 eingesetzt werden.

4. Zusammensetzung nach einem der vorherigen Ansprüche, **dadurch gekennzeichnet, dass** die Polyolkomponente mit einem Anteil von 5 bis 30 Gew.-% und/oder dass die Isocyanatkomponente mit einem Anteil von bis zu 70 Gew.-%, jeweils bezogen auf das Gesamtgewicht der Zusammensetzung, in der Zusammensetzung enthalten ist bzw. sind.

5. Zusammensetzung nach einem der vorherigen Ansprüche, **dadurch gekennzeichnet, dass** die terminalen Isocyanat-Gruppen des Präpolymers nicht blockiert sind.

6. Zusammensetzung nach einem der vorherigen Ansprüche, **dadurch gekennzeichnet, dass** das Di- oder Polyisocyanat-terminierte Polylacton-Präpolymer ein Polybutyrolacton oder Polycaprolacton ist.

7. Verfahren zur Herstellung der Zusammensetzung nach einem der vorherigen Ansprüche, **dadurch gekennzeichnet, dass** die Polyolkomponente mit der Isocyanatkomponente miteinander vermischt und diese Komponenten gegebenenfalls homogenisiert werden.

8. Verwendung der Zusammensetzung nach einem der vorherigen Ansprüche 1 bis 6 als Beschichtungsmittel, vorzugsweise als Erosionsschutzbeschichtungsmittel.

9. Mehrschichtlackierung, umfassend mindestens eine Lackierung einer Zusammensetzung nach einem der Ansprüche 1 bis 6.

10. Mehrschichtlackierung nach Anspruch 9, **dadurch gekennzeichnet, dass** die Lackierung einer Zusammensetzung nach einem der Ansprüche 1 bis 6 oder ein Decklack als Decklackierung (äußerste Lackierung) fungiert.

11. Verfahren zur Herstellung einer Mehrschichtlackierung nach Anspruch 9 oder 10, **dadurch gekennzeichnet, dass** mindestens eine Zusammensetzung nach einem der Ansprüche 1 bis 6 auf ein Substrat aufgetragen wird.

12. Verwendung der Mehrschichtlackierung nach Anspruch 9 oder 10 zur Beschichtung von Substraten, insbesondere als Erosionsschutzschicht.

13. Verwendung der Mehrschichtlackierung nach Anspruch 12, **dadurch gekennzeichnet, dass** als Substrate Rotorblätter, Luft- oder Landfahrzeuge, Schiffe, Bauwerke oder Pipelines beschichtet werden.

14. Substrat, beschichtet mit einer Zusammensetzung nach einem der Ansprüche 1 bis 6 oder beschichtet mit einer Mehrschichtlackierung nach Anspruch 9 oder 10.

15. Substrat nach Anspruch 13 oder 14, **dadurch gekennzeichnet, dass** Rotorblätter, Luft- oder Landfahrzeuge, Schiffe, Bauwerke oder Pipelines als Substrat dienen.

## Claims

1. A composition comprising
a. at least one polyol component having a hydroxyl group content of 9% to 15% by weight, based on the total weight of the polyol component, the polyol component comprising at least one polyol selected from the group consisting of polyether polyols, polyester polyols, and polyether polyester polyols, and
b. at least one isocyanate component having an isocyanate group content of 10% to 15% by weight, based on the total weight of the isocyanate component, the isocyanate component comprising at least one di- or polyisocyanate-terminated polylactone prepolymer.

2. The composition as claimed in claim 1, wherein the polyol component comprises at least 50% by weight, based on the total weight of the polyol component, of polyols selected from the group consisting of polyether polyols, polyester polyols, and polyether polyester polyols, and/or in that the isocyanate component comprises at least 50% by weight, based on the total weight of the isocyanate component, of a di- or polyisocyanate-terminated polylactone prepolymer.

3. The composition as claimed in either of the preceding claims, wherein the OH groups of the polyol component and the isocyanate groups of the isocyanate component are used in an equivalents ratio of 1:0.9 to 1:1.5.

4. The composition as claimed in any of the preceding claims, wherein the polyol component is present with a fraction of 5% to 30% by weight and/or in that the isocyanate component is present with a fraction of up to 70% by weight, based in each case on the total weight of the composition, in the composition.

5. The composition as claimed in any of the preceding claims, wherein the terminal isocyanate groups of the prepolymer are not blocked.

6. The composition as claimed in any of the preceding claims, wherein the di- or polyisocyanate-terminated polylactone prepolymer is a polybutyrolactone or polycaprolactone.

7. A process for preparing the composition as claimed in any of the preceding claims, which comprises mixing the polyol component together with the isocyanate component and optionally homogenizing these components.

8. The use of a composition as claimed in any of preceding claims 1 to 6 as a coating material, preferably as an erosion-resistant coating material.

9. A multicoat coating system comprising at least one coating of a composition as claimed in any of claims 1 to 6.

10. The multicoat coating system as claimed in claim 9, wherein the coating of a composition as claimed in any of claims 1 to 6 or a topcoat material functions as topcoat (outermost coating).

11. A process for producing a multicoat coating system as claimed in claim 9 or 10, which comprises applying at least one composition as claimed in any of claims 1 to 6 to a substrate.

12. The use of the multicoat coating system as claimed in claim 9 or 10 to coat substrates, more particularly as erosion-resistant coat.

13. The use of the multicoat coating system as claimed in claim 12, wherein substrates coated are rotor blades, air or land vehicles, boats, built structures or pipelines.

14. A substrate coated with a composition as claimed in any of claims 1 to 6 or coated with a multicoat coating system as claimed in claim 9 or 10.

15. The substrate as claimed in claim 13 or 14, wherein rotor blades, air or land vehicles, boats, built structures or pipelines serve as substrate.

## Revendications

1. Composition contenant
a. au moins un composant polyol ayant une teneur en groupes hydroxy de 9 à 15 % en poids, par rapport au poids total du composant polyol, le composant polyol contenant au moins un polyol qui est choisi dans le groupe constitué par des polyétherpolyols, polyesterpolyols et polyétherpolyesterpolyols, et
b. au moins un composant isocyanate ayant une teneur en groupes isocyanate de 10 à 15 % en poids, par rapport au poids total du composant isocyanate, le composant isocyanate contenant au moins un prépolymère polylactone à terminaison di- ou polyisocyanate.

2. Composition selon la revendication 1, **caractérisée en ce que** le composant polyol contient au moins 50 % en poids, par rapport au poids total du composant polyol, de polyols qui sont choisis dans le groupe constitué par des polyétherpolyols, polyesterpolyols et polyétherpolyesterpolyols et/ou **en ce que** le composant isocyanate contient au moins 50 % en poids, par rapport au poids total du composant isocyanate, d'un prépolymère polylactone à terminaison di- ou polyisocyanate.

3. Composition selon l'une quelconque des revendications précédentes, **caractérisée en ce que** les groupes OH du composant polyol et les groupes isocyanate du composant isocyanate sont utilisés en un rapport d'équivalents de 1:0,9 à 1:1,5.

4. Composition selon l'une quelconque des revendications précédentes, **caractérisée en ce que** le composant polyol est contenu dans la composition en une proportion de 5 à 30 % en poids et/ou **en ce que** le composant isocyanate est contenu dans la composition en une proportion de jusqu'à 70 % en poids, chacun par rapport au poids total de la composition.

5. Composition selon l'une quelconque des revendications précédentes, **caractérisée en ce que** les groupes isocyanate terminaux du prépolymère ne sont pas bloqués.

6. Composition selon l'une quelconque des revendications précédentes, **caractérisée en ce que** le prépolymère polylactone à terminaison di- ou polyisocyanate est une polybutyrolactone ou polycaprolactone.

7. Procédé pour la préparation de la composition selon l'une quelconque des revendications précédentes, **caractérisé en ce qu'**on mélange l'un avec l'autre le composant polyol avec le composant isocyanate et éventuellement on homogénéise ces composants.

8. Utilisation de la composition selon l'une quelconque des revendications 1 à 6 précédentes, en tant que produit de revêtement, de préférence en tant que produit de revêtement pour la protection contre l'érosion.

9. Revêtement de peinture multicouche, comprenant au moins un revêtement de peinture d'une composition selon l'une quelconque des revendications 1 à 6.

10. Revêtement de peinture multicouche selon la revendication 9, **caractérisé en ce que** le revêtement de peinture d'une composition selon l'une quelconque des revendications 1 à 6 ou une peinture de finition fonctionne en tant que revêtement de peinture de finition (revêtement de peinture externe).

11. Procédé pour la production d'un revêtement de peinture multicouche selon la revendication 9 ou 10, **caractérisé en ce qu'**on applique sur un subjectile au moins une composition selon l'une quelconque des revendications 1 à 6.

12. Utilisation du revêtement de peinture multicouche selon la revendication 9 ou 10, pour le revêtement de subjectiles, en particulier en tant que couche de protection contre l'érosion.

13. Utilisation du revêtement de peinture multicouche selon la revendication 12, **caractérisée en ce qu'**on revêt en tant que subjectiles des pales de rotor, des véhicules aériens ou terrestres, des bateaux, des bâtiments ou des pipelines.

14. Subjectile, revêtu avec une composition selon l'une quelconque des revendications 1 à 6 ou revêtu avec un revêtement de peinture multicouche selon la revendication 9 ou 10.

15. Subjectile selon la revendication 13 ou 14, **caractérisé en ce que** des pales de rotor, des véhicules aériens ou terrestres, des bateaux, des bâtiments ou des pipelines servent de subjectile.
